# EUROPEAN PATENT SPECIFICATION

(11) **EP 3 523 150 B1**
(45) Date of publication and mention of the grant of the patent: **09.09.2020**
(21) Application number: 16836151.7
(22) Date of filing: 10.10.2016
(51) Int. Cl.: B60J 10/242, B60J 10/248

(54) **SEAL GASKET OF ELONGATED SHAPE FOR A TRANSPORT VEHICLE**
DICHTUNG MIT LÄNGLICHER FORM FÜR EIN TRANSPORTFAHRZEUG
JOINT D'ÉTANCHÉITÉ DE FORME ALLONGÉE POUR VÉHICULE DE TRANSPORT

(43) Date of publication of application: 14.08.2019
(73) Proprietor: Hutchinson, 75008 Paris (FR)
(72) Inventor: ENGEL, Wolfgang, 35500 Vitre (FR)
(74) Representative: Gevers & Orès
(86) International application number: PCT/IB2016/001639
(87) International publication number: WO 2018/069743

(56) References cited:
- GB-A- 2 266 742
- JP-A- H07 232 559
- JP-A- 2000 135 581
- JP-A- 2002 154 149
- JP-A- 2009 248 620

## Description

### TECHNICAL FIELD

The invention is relative to a seal gasket of elongated shape for a transport vehicle such as an automotive, a railway vehicle, an aircraft, etc. The invention is further relative to a method of producing the seal gasket and to a transport vehicle including said seal gasket (and used e.g. as door seal, tailgate or trunk seal, boot seal, auxiliary seal, etc.).

### BACKGROUD OF THE INVENTION

Elongated seal gaskets are for instance used to provide sealing between the body and the doors of an automotive vehicle. They are positioned either on the body or on the doors themselves. When the gaskets are positioned on vehicle doors, they can be held in place by clips that are secured to the gasket by means of a fixing rail mounted on the door, or by an adhesive secured to the gasket. When the gaskets are positioned on vehicle body, they can be held in place by continuous clipping onto a flange or by an adhesive secured to the gasket.

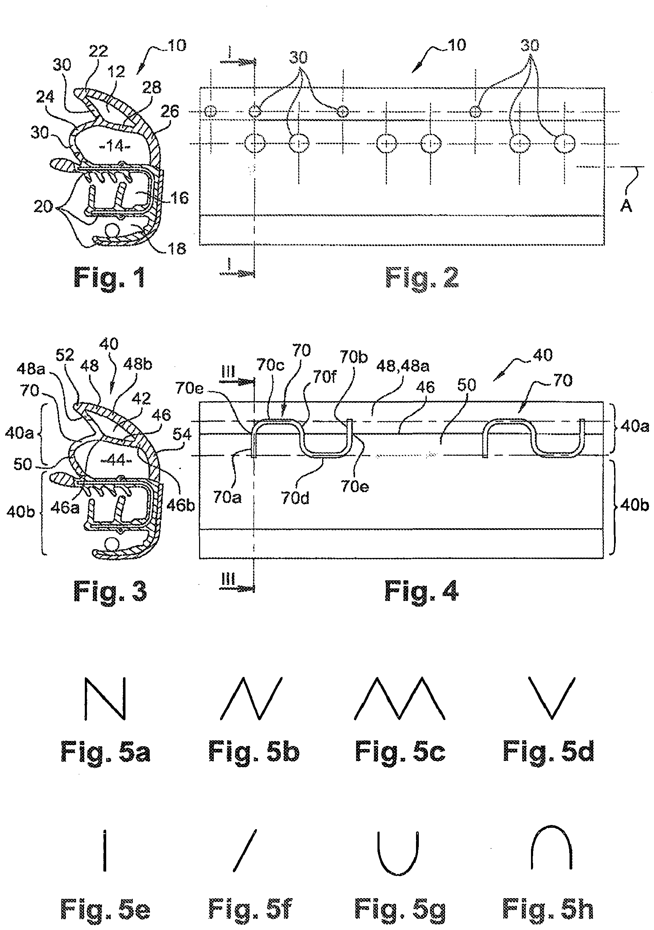

Figures 1 and 2 show a seal gasket 10 according to the prior art. A longitudinal portion of this gasket 10 is shown in figure 2 and is viewed in cross section in figure 1. The cross section plane I-I is substantially perpendicular to the longitudinal axis A of the seal gasket 10. The seal gasket 10 may be manufactured by extruding or co-extruding elastomer and/or thermoplastic materials. The seal gasket 10 is substantially flexible or semi-rigid and has a tubular shape since it includes in general at least one longitudinal cavity 12, 14, 16, 18 or bulb extending along the longitudinal axis A of the gasket.

The seal gasket shown in these figures includes two kinds of longitudinal cavities, which are respectively open (cavities 16, 18) and closed (cavities 12, 14) in cross section.

An open cavity 16, 18 is a cavity which is open when viewed in cross section. Such open cavity is delimited by walls 20 that do not extend over the entire periphery of the cavity. Such open cavity is therefore, still in cross section, in fluid communication with the outside of the gasket.

To the contrary, a closed cavity 12, 14 is a cavity which is closed when viewed in cross section. Such closed cavity is delimited by walls 22, 24, 26 or partitions 28 that extend over the entire periphery of the cavity. Such closed cavity is therefore not (just after manufacture of the gasket), still in cross section, in fluid communication with the outside of the gasket.

Such gasket 10 provides sealing by being compressed, for instance between the body and a door of a vehicle. The gasket 10 extends on the body in an area corresponding to the periphery of the door and must ensure a good sealing against dust and water, and also good acoustics attenuation of the vehicle cabin from the outside noises. It is hence necessary for the seal to ensure a sufficient contact pressure of its deformable area against the door of the vehicle. On the other hand, the closing effort of the door must not be excessive, or induce a door bounce back.

It is thus well known to provide regularly spaced apart vent holes 30 preferably in a hidden area of the seal gasket 10. Said vent holes 30 extend through the walls 22, 24 delimiting the closed cavities 12, 14 and permit air evacuation from these cavities during door closure. The open cavities 16, 18 are already in fluid communication with the outside of the gasket and so no vent holes are necessary in the walls delimiting the open cavities. In the absence of such vent holes, the air contained in the closed cavities would be compressed during door closure and would lead to the above drawbacks. Despite the fact that the closed cavities 12, 14, open to the outside of the gasket at the longitudinal ends of the gasket, it is not sufficient to avoid the above-mentioned drawbacks in use considering that the complete gasket length is generally of about 3.5 meters.

In the prior art, the vent holes 30 are formed by drilling a seal gasket, either by a drill bit or a laser. As described in prior art documents DE-A1-10 2006 032 349 and EP-A1-2 037 072, the use of a discontinuous laser beam is well known to drill vent holes in seal gaskets, which provides an efficient, chipless (clean) alternative to mechanical hole drilling. This prior art also mentions the possibility of using a mirror to correctly re-direct the laser beam in otherwise inaccessible areas of the gasket.

It is also know in the prior art, when confronted to seal gasket with multiple cavities, to drill the vent holes into one cavity and then into the other cavities alternately, in order to permit air evacuation from both cavities. Another solution would be to use two independent lasers to drill simultaneously two vent holes opening respectively through two different cavities of a single gasket. An other seal gasket of the prior art is disclosed in document JP H 07232559 A.

JP-A-2000-135581A also teaches to drill a vent hole in two cavities in a row of the same multiple cavity profile, with a single positioning of the laser beam. However, this solution induces complex gasket and laser device designs (shape of the gasket, very precise orientation of the laser beam to avoid unwanted bulb damage), in order to ensure that the air can be evacuated in all life situations of the seal, especially when it is in compression between a door and a body.

The present invention proposes an improvement of the prior art technology described above.

### SUMMARY OF THE INVENTION

The invention proposes a seal gasket of elongated shape, for a transport vehicle, said seal gasket having in cross section at least two adjacent closed cavities separated from each other by at least one inner partition, said at least one inner partition being connected to two outer walls defining respectively at least partially said cavities, said seal having vent holes for air communication between the cavities and the outside of the seal gasket, characterized in that at least one of said vent holes is of elongated and continuous shape and extends through and between said outer walls by also crossing said at least one inner partition.

The words "inner" and "outer" designate positions of members with respect to the inside and outside of the gasket. An inner member is located inside the gasket and more precisely includes at least one face or portion located inside the gasket. An outer member is located outside the gasket and more precisely includes at least one face or portion located outside the gasket.

The invention allows simplifying the manufacture of a seal gasket since a single vent hole can open through two adjacent cavities. This single vent hole can be formed by a single laser or laser beam. We can then understand that a single laser or laser beam can be used to create simultaneously, or more precisely by a single path, air communications between the cavities and the outside of the gasket. This is particularly advantageous because it simplifies and accelerates the manufacture and the drilling of the gasket.

The seal gasket according to the invention may comprise one or more of the following features, taken alone from each other or in combination with each other:
- said at least one of said vent holes has its longitudinal ends which open respectively into said at least two cavities;
- said at least one of said vent holes has its longitudinal ends which open into one of said at least two cavities;
- said at least one of said vent holes is substantially Z-, S-, M-, I-, /-, V-, W-, U- or C-shaped, although the invention should not be limited to this list of shapes;
- said at least one of said vent holes is substantially S-shaped and comprises a curved portion and an end portion opening into each of said at least two cavities;
- the seal gasket is made from an extruded material;
- said at least one of said vent holes has a length greater than ten times its width;
- said at least one of said vent holes has a width between 0.05 and 3.5mm, and preferably between 0.1 and 0.5mm;
- said at least one of said vent holes has a depth between 1 and 3mm, and preferably between 1.5 and 2mm;
- said at least one of said vent holes extends at least partially in said at least one inner partition;
- said outer walls are non-coplanar;
- the seal gasket comprises at least one deformable or compressible portion;
- the seal gasket is made at least in part of a cellular elastomer;
- at least one of said vent holes extends through said at least one inner partition.

The invention further proposes a transport vehicle, such as an automotive, a railway vehicle or an aircraft, characterized in that it comprises at least one gasket seal as described above configured for instance to be compressed between a frame and a door or between two doors.

The invention further proposes a method of producing a seal according to one of claims 1 to 10, characterized in that it comprises a laser drilling step of said at least one of said vent holes.

The method according to the invention may comprise one or more of the following steps or features, taken alone from each other or in combination with each other:
- said at least one of said vent holes is achieved by moving a laser source or beam;
- the gasket seal is moved in a first longitudinal direction and the laser source or beam is moved, preferably only, in a second transverse direction;
- the gasket seal is preformed by extrusion;
- the seal is drilled in line after its extrusion;
- the laser is of CO₂-type.

### BRIEF DESCRIPTION OF THE FIGURES

The invention will be better understood and other details, features and advantages of the invention will appear more clearly on reading the following description given by way of non-limiting examples and with reference to the accompanying drawings in which:
- Figure 1 is a cross sectional view of a seal gasket according to the prior art (according to the cross section plan I-I of figure 2);
- Figure 2 is a schematic view of a seal gasket according to the prior art;
- Figure 3 is a cross sectional view of a seal gasket according to the invention (according to the cross section plan III-III of figure 4);
- Figure 4 is a schematic view of a seal gasket according to the invention;
- Figures 5a to 5h show shapes of vent holes of a seal gasket according to the invention;
- Figures 6a to 6e are cross sectional views of seal gaskets according to the invention; and
- Figure 7 is a very schematic view of means for manufacturing a seal gasket according to the invention, and shows steps of a method of producing such seal gasket.

### MORE DETAILED DESCRIPTION

Figures 1 and 2 have been described above and show the prior art of the invention. The vent holes 30 are drilled by means of a drill bit or a laser. Each vent hole 30 has a circular shape in cross section. When a vent hole is laser drilled, a laser beam is focused onto an outer wall 22, 24 of the seal gasket so as to form the hole by sublimation of the material of the wall. Depending of the diameter of the hole and of the laser beam, the hole may be formed by immobilizing the gasket 10 and rotating the laser or the laser beam about an axis corresponding to the axis of the hole to be formed. This step should be repeated a number of times equal to the number of vent holes 30 to be drilled, which can induce a long period and can be expensive.

Figures 3 and 4 show a seal gasket 40 according to an embodiment of the invention.

The seal gasket 40 has in cross section at least two adjacent closed cavities 42, 44 which are separated from each other by an inner partition 46. The inner partition 46 is connected to outer walls 48, 50, 54 defining at least partially said cavities 42, 44.

More precisely, in the example shown in the figures, a first upper closed cavity 42 is delimited (from the outside) by an upper outer wall 48 of substantially V shape in cross section. This upper outer wall 48 comprises two legs 48a, 48b forming respectively the two branches of the V shape. The longitudinal tip 52 of this upper outer wall 48 is located at an upper end of the seal gasket 40, and its longitudinal edges (opposite to the tip 52) are connected together by the inner partition 46. The front longitudinal end 46a of the partition 46 is connected to the lower longitudinal edge of the front leg 48a of the upper outer wall 48, and the rear longitudinal end 46b of the partition 46 is connected to the lower longitudinal edge of the rear leg 48b of the upper outer wall 48. The upper longitudinal edges of the front and rear legs 48a, 48b are connected together so as to form said longitudinal tip 52.

A second lower closed cavity 44 is delimited (from the outside) by front and rear outer walls 50, 54 of substantially curved shape in cross section. The front longitudinal end 46a of the partition 46 is (also) connected to the upper longitudinal edge of the front outer wall 50, the concavity of which facing the rear. The rear longitudinal end 46b of the partition is (also) connected to the upper longitudinal edge of the rear outer wall 54, the concavity of which facing the front.

As shown in the drawings, the walls 48, 50, 54 and partition 46 formed part an upper portion 40a of the seal gasket 40, which can be made of a flexible and deformable material and configured for providing sealing. The seal gasket 40 includes a lower portion 40b which is rigid or semi-rigid and configured for fixing on a support, such as a door or a body of a vehicle. The gasket and in particular its upper portion is preferably made of cellular elastomer and for instance TPE, TPS or EPDM.

The seal gasket 40 needs vent holes for air communication between the closed cavities 42, 44 and the outside of the seal gasket. According to the invention, the vent holes are of elongated and continuous shape and extend through and between outer walls delimiting open cavities by also crossing an inner partition connected to these outer walls.

In the example shown, vent holes 70 are drilled into the outer walls 48, 50 of the gasket 40 and cross the inner partition 46. Figure 4 shows that the gasket 40 may have several spaced holes 70 aligned longitudinally one behind each other.

Figure 4 further shows that the hole 70 may be S-shaped. In this case, an end 70a of each vent hole 70 opens trough a first cavity, the lower cavity 44 in the example shown. The opposite end 70b of each vent hole 70 opens trough the other cavity, i.e., the upper one 42. Between these ends 70a, 70b, the vent hole 70 includes two curved portions 70c, 70d opening through both cavities 42, 44 respectively. Each curved portion 70c, 70d is connected to an end 70a, 70b by a connecting zone 70e crossing the partition 46 or locating at the level of the same, and both curved portions 70c, 70d are connected by a connecting zone 70f also crossing or locating at the level of the partition 46. Then, in the examples shown, each vent hole 70 comprises two portions (the end 70a and the curved portion 70d - or the end 70b and the curved portion 70c) opening through each cavity 42, 44, and three connecting zones 70e and 70f located at the level of the partition 46.

Figures 5a to 5h show various embodiments of the shape of a vent hole 70. The vent hole may be N-shaped (figures 5a and 5b), M-shaped (figure 5c), V-shaped (figure 5d), I-shaped (figures 5e and 5f), U or C-shaped (figures 5g and 5h), etc. The branches of each shape may be more or less inclined with respect to a transverse plane (such as III-III of figure 4) of the gasket 40.

Contrary to figure 4 where the longitudinal ends 70a, 70b of each vent hole 70 open respectively into the two cavities 72, the situation is not the same with vent holes having the designs of figures 5c, 5d, 5g and 5h. In these last figures, each vent hole has its longitudinal ends which open into a single cavity. The other cavity communicates with the outside of the gasket by means of intermediate portion(s) of the vent hole.

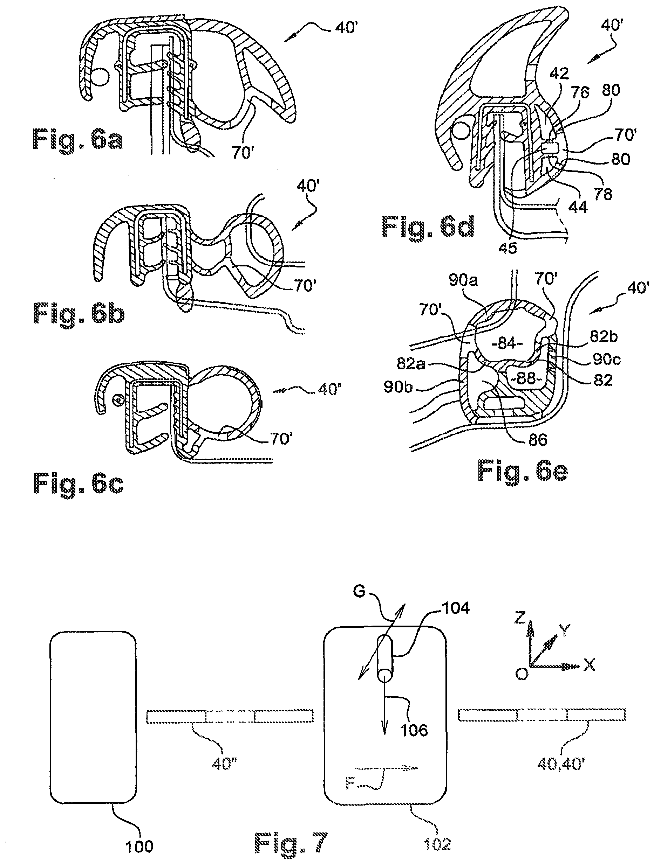

Figures 6a to 6e show various embodiments of seal gaskets 40' including vent holes 70' as described above. The shapes of the fixing and sealing portions of the gasket may vary (figures 6a to 6d). Rather than including a fixing portion, the gasket may simply be bonded to a support (figure 6e).

The vent hole 70' may extend between and through more than two cavities. As shown in figure 6d, a single vent hole 70' can open through three adjacent cavities 42, 44, 45 and even more. The gasket 70' includes an intermediate cavity 45 which is located below an upper closed cavity 42 and separated therefrom by an upper partition 76, and which is located above a lower closed cavity 44 and separated therefrom by a lower partition 78. The vent hole 70' extends through the outer walls 80 delimiting at least in part the three cavities by also crossing the two inner partitions 76, 78.

A closed cavity may communicates with the outside of the gasket 40' by means of two vent holes 70' located substantially in the same transverse plane as shown in figure 6e. The gasket 40' of figure 6e comprises a partition 82 of Y-shape the branches of which delimiting three adjacent closed cavities 84, 86, 88 with outer walls 90a, 90b, 90c of the gasket. In the transverse plane mentioned above, a first vent hole 70' extends through and between two outer walls 90a, 90b by crossing a first branch 82a (the one located at the left-hand corner) of the inner partition 82, and a second vent hole 70' extends through and between two other outer walls 90a, 90c by crossing a second branch 82b (the one located at the right-hand corner) of the inner partition 82.

Advantageously, the vent holes 70, 70' are drilled in a seal gasket 40, 40' by means of a laser, for instance a laser of the CO₂-type.

Figure 7 shows schematically means for manufacturing and drilling a seal gasket 40, 40'.

Reference numeral 100 designates an extrusion machine configured to produce by extrusion an elongated seal gasket 40" (not yet drilled). Then, the seal gasket 40" is drilled by a laser drilling machine 102 configured to produce a seal gasket 40, 40' according to the invention. The drilling machine 102 may comprise one or more laser source 104 emitting one or more laser beam 106 and in general optic means to focus and orientate the laser beam on a specific zone of the seal gasket 40".

It is possible to use a single laser beam 106 to produce a series of vent holes 70, 70' aligned longitudinally behind each other as shown in figure 4. The machine 102 or another associated means may be configured to displace the seal gasket 40" to be drilled along the longitudinal axis of the gasket (arrow F). The laser 104 or the laser beam 106 may be displaced in a transverse direction G, preferably horizontal. The combination of both displacements allows drilling holes of various shapes (as the ones shown in figures 4 and 5a to 5h). The laser beam may also be a result of a complex orientation obtained with one or more mirrors. Despite the fact that the displacements may be located in a substantially horizontal plane (XoY), the vent holes to be formed may have tridimensional shape. Indeed, the shape of the vent holes also depends on the shape of the walls to be drilled. When the (portions of) walls to be drilled are substantially coplanar, as it is the case for instance of the ones in figures 6d and 6e, the vent hole may extend into a plane. However, in case where the (portions of) walls to be drilled are non-coplanar, as it is the case for instance of the vent hole of figure 3, the vent hole may have a complex shape, i.e., a tridimensional shape.

The aim of the embodiment of figure 7 is therefore to improve the laser drilling of vent holes in seal gasket even when they have a complex design. Instead of being shot in a single pre-defined direction with a defined frequency, the laser beam browses a specific path, thus forming a 3D shaped hole that reaches all closed cavities at each path.

As specified above, a vent hole 70, 70' has an elongated and continuous shape. Its length may be greater than ten times its width. Its width may be between 0.05 and 3.5mm, and preferably between 0.1 and 0.5mm. Its length may be between 0.5 and 35mm, and preferably between 1 and 5mm. Its depth may be between 1 and 3mm, and preferably between 1.5 and 2mm. This depth corresponds to the thickness of the outer walls of the gasket into which the vent hole is formed.

The depth of the vent hole may be such that the vent hole extends more or less deeply in the partition(s). Even if the vent hole crosses a partition or passes at the level of a partition, it can stay as before drilling (no drilled - cf., e.g., figure 3). This is the case when the drilling depth is substantially identical to the depth of the (portions of) outer walls to be drilled. To the contrary, in case where the drilling depth would be higher than the depth of the (portions of) outer walls to be drilled, the partitions may also be partially drilled (cf., e.g., figures 6d and 6e).

The benefits of the invention are:
- single laser shot for multiple holes drilling, which prevents the use of multiple drilling devices (laser or not);
- connection to outside area of each cavity at each drill (instead of alternatively one cavity, then the other);
- no chips (or swarf), i.e., no risk of clogged hole and of quality issue;
- much smaller size of vent possible than with classic drilling device;
- reduced frequency of drilling as compared to alternate double drilling.

## Claims

1. Seal gasket (40, 40') of elongated shape, for a transport vehicle, said seal gasket having in cross section at least two adjacent closed cavities (42, 44, 45, 84, 86, 88) separated from each other by at least one inner partition (46, 76, 78, 82), said at least one inner partition being connected to at least two outer walls (48, 50, 80, 90a, 90b, 90c) defining respectively at least partially said cavities, said seal having vent holes (70, 70') for air communication between the cavities and the outside of the seal gasket,
wherein at least one of said vent holes is of elongated and continuous shape, **characterized in that** said at least one of said vent holes extends through and between said outer walls by also crossing said at least one inner partition.

2. Seal gasket (40, 40') according to claim 1, wherein said at least one of said vent holes (70, 70') has its longitudinal ends (70a, 70b) which open respectively into said at least two cavities (42, 44, 84, 86, 88).

3. Seal gasket according to claim 1, wherein said at least one of said vent holes has its longitudinal ends which open into one of said at least two cavities.

4. Seal gasket (40, 40') according to one of the preceding claims, wherein said at least one of said vent holes (70, 70') is substantially Z-, S-, M-, I-, /-, V-, W-, U- or C-shaped.

5. Seal gasket (40, 40') according to the preceding claim, wherein said at least one of said vent holes (70, 70') is substantially S-shaped and comprises a curved portion (70c, 70d) and an end portion (70a, 70b) opening into each of said at least two cavities (42, 44).

6. Seal gasket (40, 40') according to one of the preceding claims, wherein it is made from an extruded material.

7. Seal gasket (40, 40') according to one of the preceding claims, wherein said at least one of said vent holes (70, 70') has a length greater than ten times its width.

8. Seal gasket (40, 40') according to one of the preceding claims, wherein said at least one of said vent holes (70, 70') has a width between 0.05 and 3.5mm, and preferably between 0.1 and 0.5mm.

9. Seal gasket (40, 40') according to one of the preceding claims, wherein said at least one of said vent holes (70, 70') has a depth between 1 and 3mm, and preferably between 1.5 and 2mm.

10. Seal gasket (40, 40') according to one of the preceding claims, wherein said at least one of said vent holes (70, 70') extends at least partially in said at least one inner partition (46, 76, 78, 82).

11. Seal gasket (40, 40') according to one of the preceding claims, wherein said outer walls are non-coplanar (48, 50, 90a, 90b, 90c).

12. Transport vehicle, such as an automotive, a railway vehicle or an aircraft, **characterized in that** it comprises at least one gasket seal (40, 40') according to one of the preceding claims configured for instance to be compressed between a frame and a door or between two doors.

13. A method of producing a seal according to one of claims 1 to 11, **characterized in that** it comprises a laser drilling step of said at least one of said vent holes (70, 70').

14. Method according to the preceding claim, wherein said at least one of said vent holes (70, 70') is achieved by moving a laser source (104) or beam (106).

15. Method according to the preceding claim, wherein the gasket seal (40, 40') is moved in a first longitudinal direction (F) and the laser source or beam (104, 106) is moved, preferably only, in a second transverse direction (G).

16. A method according to one of claims 13 to 15, wherein the gasket seal (40, 40') is preformed by extrusion.

17. Method according to the preceding claim, wherein the gasket seal (40, 40') is drilled in line after its extrusion.

18. A method according to one of claims 13 to 17, wherein the laser is of CO₂-type.

## Patentansprüche

1. Dichtung (40, 40') mit länglicher Form für ein Transportfahrzeug, wobei die Dichtung im Querschnitt mindestens zwei aneinandergrenzende geschlossene Hohlräume (42, 44, 45, 84, 86, 88) aufweist, die voneinander durch mindestens eine innere Teilung (46, 76, 78, 82) getrennt sind, wobei die mindestens eine innere Teilung mit mindestens zwei Außenwänden (48, 50, 80, 90a, 90b, 90c) verbunden ist, die jeweils mindestens teilweise die Hohlräume definieren, wobei die Dichtung Belüftungslöcher (70, 70') zur Luftkommunikation zwischen den Hohlräumen und der Außenseite der Dichtung aufweist,
wobei mindestens eines der Belüftungslöcher von länglicher und kontinuierlicher Form ist, **dadurch gekennzeichnet, dass** sich das mindestens eine der Belüftungslöcher durch die und zwischen den Außenwände(n) erstreckt, indem es auch die mindestens eine innere Teilung kreuzt.

2. Dichtung (40, 40') nach Anspruch 1, wobei das mindestens eine der Belüftungslöcher (70, 70') seine Längsenden (70a, 70b) aufweist, die sich jeweils in die mindestens zwei Hohlräume (42, 44, 84, 86, 88) öffnen.

3. Dichtung nach Anspruch 1, wobei die mindestens eine der Belüftungsöffnungen ihre Längsenden aufweist, die sich in mindestens einen der zwei Hohlräume öffnen.

4. Dichtung (40, 40') nach einem der vorstehenden Ansprüche, wobei das mindestens eine der Belüftungslöcher (70, 70') im Wesentlichen Z-, S-, M-, I-, /-, V-, W-, U- oder C-förmig ist.

5. Dichtung (40, 40') nach dem vorstehenden Anspruch, wobei das mindestens eine der Belüftungslöcher (70, 70') im Wesentlichen S-förmig ist und einen gekrümmten Abschnitt (70c, 70d) und einen Endabschnitt (70a, 70b), die sich in jeden der mindestens zwei Hohlräume (42, 44) öffnen, umfasst.

6. Dichtung (40, 40') nach einem der vorstehenden Ansprüche, wobei sie aus einem extrudierten Material hergestellt ist.

7. Dichtung (40, 40') nach einem der vorstehenden Ansprüche, wobei mindestens eines der Belüftungslöcher (70, 70') eine Länge aufweist, die größer als zehn Mal seine Breite ist.

8. Dichtung (40, 40') nach einem der vorstehenden Ansprüche, wobei das mindestens eine der Belüftungslöcher (70, 70') eine Breite zwischen 0,05 und 3,5 mm, und vorzugsweise zwischen 0,1 und 0,5 mm aufweist.

9. Dichtung (40, 40') nach einem der vorstehenden Ansprüche, wobei das mindestens eine der Belüftungslöcher (70, 70') eine Tiefe zwischen 1 und 3 mm, und vorzugsweise zwischen 1,5 und 2 mm aufweist.

10. Dichtung (40, 40') nach einem der vorstehenden Ansprüche, wobei sich das mindestens eine der Belüftungslöcher (70, 70') mindestens teilweise in der mindestens einen inneren Teilung (46, 76, 78, 82) erstreckt.

11. Dichtung (40, 40') nach einem der vorstehenden Ansprüche, wobei die Außenwände (48, 50, 90a, 90b, 90c) nicht koplanar sind.

12. Transportfahrzeug, wie ein Kraftfahrzeug, ein Eisenbahnfahrzeug oder ein Luftfahrzeug, **dadurch gekennzeichnet, dass** es mindestens eine Dichtung (40, 40') nach einem der vorstehenden Ansprüche umfasst, die zum Beispiel konfiguriert ist, um zwischen einem Rahmen und einer Tür oder zwischen zwei Türen komprimiert zu sein.

13. Verfahren zum Erzeugen einer Dichtung nach einem der Ansprüche 1 bis 11, **dadurch gekennzeichnet, dass** es einen Laserbohrschritt des mindestens einen der Belüftungslöcher (70, 70') umfasst.

14. Verfahren nach dem vorstehenden Anspruch, wobei das mindestens eine der Belüftungslöcher (70, 70') durch Bewegen einer Laserquelle (104) oder eines Laserstrahls (106) erzielt wird.

15. Verfahren nach dem vorstehenden Anspruch, wobei die Dichtung (40, 40') in einer ersten Längsrichtung (F) bewegt wird, und die Laserquelle oder der Laserstrahl (104, 106) in vorzugsweise nur eine zweite Querrichtung (G) bewegt wird.

16. Verfahren nach einem der Ansprüche 13 bis 15, wobei die Dichtung (40, 40') durch Extrusion vorgeformt wird.

17. Verfahren nach dem vorstehenden Anspruch, wobei die Dichtung (40, 40') in der Herstellungslinie nach ihrer Extrusion gebohrt wird.

18. Verfahren nach einem der Ansprüche 13 bis 17, wobei der Laser vom Typ CO₂ ist.

## Revendications

1. Joint d'étanchéité (40, 40') de forme allongée, pour un véhicule de transport, ledit joint d'étanchéité présentant en coupe transversale au moins deux cavités fermées (42, 44, 45, 84, 86, 88) adjacentes séparées l'une de l'autre par au moins une cloison interne (46, 76, 78, 82), ladite au moins une cloison interne étant raccordée à au moins deux parois externes (48, 50, 80, 90a, 90b, 90c) définissant respectivement au moins partiellement lesdites cavités, ledit joint présentant des trous d'aération (70, 70') pour une communication d'air entre les cavités et l'extérieur du joint d'étanchéité,
dans lequel
au moins un desdits trous d'aération est de forme allongée et continue, **caractérisé en ce que** ledit au moins un desdits trous d'aération s'étend à travers et entre lesdites parois externes en croisant également ladite au moins une cloison interne.

2. Joint d'étanchéité (40, 40') selon la revendication 1, dans lequel au moins un desdits trous d'aération (70, 70') présente ses extrémités longitudinales (70a, 70b) qui s'ouvrent respectivement à l'intérieur desdites au moins deux cavités (42, 44, 84, 86, 88).

3. Joint d'étanchéité selon la revendication 1, dans lequel au moins un desdits trous d'aération présente ses extrémités longitudinales qui s'ouvrent à l'intérieure de l'une desdites au moins deux cavités.

4. Joint d'étanchéité (40, 40') selon une des revendications précédentes, dans lequel ledit au moins un desdits trous d'aération (70, 70') est sensiblement en forme de Z, de S, de M, de I, de /, de V, de W, de U ou de C.

5. Joint d'étanchéité (40, 40') selon la revendication précédente, dans lequel ledit au moins un desdits trous d'aération (70, 70') est sensiblement en forme de S et comprend une partie incurvée (70c, 70d) et une partie d'extrémité (70a, 70b) s'ouvrant à l'intérieur de chacune desdites au moins deux cavités (42, 44).

6. Joint d'étanchéité (40, 40') selon une des revendications précédentes, dans lequel il est fait à partir d'un matériau extrudé.

7. Joint d'étanchéité (40, 40') selon une des revendications précédentes, dans lequel ledit au moins un desdits trous d'aération (70, 70') présente une longueur supérieure à dix fois sa largeur.

8. Joint d'étanchéité (40, 40') selon une des revendications précédentes, dans lequel ledit au moins un desdits trous d'aération (70, 70') présente une largeur entre 0,05 et 3,5 mm, et de préférence entre 0,1 et 0,5 mm.

9. Joint d'étanchéité (40, 40') selon une des revendications précédentes, dans lequel ledit au moins un desdits trous d'aération (70, 70') présente une profondeur entre 1 et 3 mm, et de préférence entre 1,5 et 2 mm.

10. Joint d'étanchéité (40, 40') selon une des revendications précédentes, dans lequel ledit au moins un desdits trous d'aération (70, 70') s'étend au moins partiellement dans ladite au moins une cloison interne (46, 76, 78, 82).

11. Joint d'étanchéité (40, 40') selon une quelconque des revendications précédentes, dans lequel les parois externes sont non coplanaires (48, 50, 90a, 90b, 90c).

12. Véhicule de transport, tel qu'un véhicule automobile, un véhicule ferroviaire ou un aéronef, **caractérisé en ce qu'**il comprend au moins un joint d'étanchéité (40, 40') selon une des revendications précédentes configuré par exemple pour être comprimé entre un cadre et une porte ou entre deux portes.

13. Procédé de production d'un joint selon une des revendications 1 à 11, **caractérisé en ce qu'**il comprend une étape de forage au laser dudit au moins un desdits trous d'aération (70, 70').

14. Procédé selon la revendication précédente, dans lequel ledit au moins un desdits trous d'aération (70, 70') est obtenu en déplaçant une source (104) ou un faisceau (106) laser.

15. Procédé selon la revendication précédente, dans lequel le joint d'étanchéité (40, 40') est déplacé dans une première direction longitudinale (F) et la source ou faisceau laser (104, 106) est déplacé(e), de préférence seulement, dans une seconde direction (G) transversale.

16. Procédé selon une des revendications 13 à 15, dans lequel le joint d'étanchéité (40, 40') est préformé par extrusion.

17. Procédé selon la revendication précédente, dans lequel le joint d'étanchéité (40, 40') est foré en ligne après son extrusion.

18. Procédé selon une des revendications 13 à 17, dans lequel le laser est du type CO₂.
